# EUROPEAN PATENT APPLICATION

(11) **EP 4 657 862 A1**
(43) Date of publication of application: **03.12.2025**
(21) Application number: 25178828.7
(22) Date of filing: 26.05.2025
(51) Int. Cl.: H04N 21/218, H04N 21/45, H04N 21/81

(54) **MEDIA MOTION COMFORT**

(30) Priority: 30.05.2024 US 202463653618 P; 08.05.2025 US 202519203029
(71) Applicant: Apple Inc., Cupertino, CA 95014 (US)
(72) Inventor: SHERIDAN, Ryan M., Huntington Beach (US); MOSS, Alan M., Laguna Beach (US); YAEGER, Matthew J., Tustin (US); REED, Montana, Cupertino (US)
(74) Representative: COPA Copenhagen Patents

(57) **Abstract**

Techniques for managing motion data for an immersive media item include receiving media data and corresponding motion data, and determining whether a motion compensation trigger is satisfied. This trigger could be based on a personal motion compensation threshold of a viewer, one or more physical characteristics of the viewer, or a user-selected motion level. If the motion compensation trigger is satisfied, a corrective action is performed on the media data to obtain adjusted media data, which is then presented on a display of an electronic device. The corrective action involves determining a prescriptive motion based on the motion data and applying this prescriptive motion to the media data.

## Description

### Field of the Invention

This disclosure relates generally to media streaming and more specifically to providing a metadata track with motion and comfort information.

### Background

Media consumption is a frequent use of electronic devices. Users can use many types of electronic devices to access and stream live media content for playback. Many of these electronic devices support high-definition media playback, such as Ultra HD or 4K, on a compatible display.

In current times, it can be preferable to view media in an immersive manner. As an example, a user may wish to stream a media item on a head-mounted device. In some embodiments, different users may be more susceptible to a bad user experience based on high motion content. Thus, what is needed is a technical improvement for handling high motion data in immersive content.

### Brief Description of the Drawings

FIG. **1** shows, in block diagram form, a simplified network diagram according to one or more embodiments.
FIG. **2** shows, in flowchart form, an example method for producing immersive content, according to one or more embodiments.
FIG. **3** shows, in flowchart form, an example method of determining motion metrics, in accordance with one or more embodiments.
FIG. **4** shows, in flowchart form, an example method of determining phobia metrics, in accordance with one or more embodiments.
FIG. **5** shows, in flowchart form, an example method for dynamically adjusting immersive content based on motion data, according to one or more embodiments.
FIG. **6** shows, in flowchart form, a technique for providing immersive media on a media distribution platform, according to one or more embodiments.
FIGs. **7A-7B** show, in flow diagram form, example processes for utilizing comfort metadata, according to one or more embodiments.
FIG. **8** shows an example system diagram for an electronic device in accordance with one or more embodiments.

### Detailed Description

The following disclosure is related to techniques for providing real-time feedback regarding camera motion, and providing a metadata track which encodes motion information for immersive content. In some embodiments, immersive media can be created for a variety of content, such as sports, cinematic media, and the like. During production, content may be captured which includes a range of motion characteristics or other content characteristics which may affect viewers in different ways. In particular, abrupt motion, fast motion and the like may lead to a reduced quality viewing experience for a user. Similarly, different viewers may have different tolerance levels for certain immersive content or experiences.

In order to assist production of immersive content, techniques described herein provide a real-time feedback mechanism for comfort. For example, as immersive scenes are generated or captured, techniques described herein can track or determine camera motion and other characteristics, and provide guidance as to a comfort level. For example, an immersive media item may be required to satisfy some predefined comfort criteria based on motion, content, or the like. During production, a determination may be made as to whether, based on camera motion and other indicators, the captured content satisfies predefined comfort criteria. In doing so, a media producer can understand, in real time, whether captured content will satisfy prescribed comfort level. In some embodiments, replacement or alternative scenes can be produced for the immersive media item, which can be provided for distribution to playback devices.

Further, techniques described herein provide a technique for allowing personalized immersive media which satisfies a user's personal comfort level. For example, a user who is more familiar with immersive content may be accustomed to higher levels of motion than a user just beginning to experience immersive content. To that end, a user may have a specific comfort level at which immersive media should be presented. In some embodiments, an immersive media item may be generated with alternate scenes if a particular scene exceeds a user's comfort level. For example, the particular scene can be swapped for an alternative scene which would satisfy the user's comfort metrics. In some embodiments, this is performed on a device by a metadata track which encodes motion information for the camera capturing the scene. By encoding camera motion information, a corrective action can be performed on a particular scene prior to presenting the scene to the user. Alternatively, motion information may be derived from the media data, for example at a playback device. A motion level may be determined from the media content, and compared against a threshold, for example for a specific user. In another example, some viewers may be negatively affected by certain content, and the immersive media can avoid presenting the content.

According to one more embodiments, techniques described herein provide a technical improvement to immersive media capture and playback by providing real-time feedback regarding camera motion for the production stage. Real-time feedback during the production stage provides a technical solution for ensuring that media capture satisfies user comfort metrics in real time, thereby reducing time and resources by avoiding unnecessary content capture, or by allowing alternative content capture. Further, a metadata track that incorporates comfort information provide the technical solution for different playback requirements at different devices by allowing a device to identify portions of the immersive media item which would not satisfy a particular viewer's personal comfort parameters, and perform a corrective action prior to presenting the media content to the user.

In the following description, for purposes of explanation, numerous specific details are set forth to provide a thorough understanding of the disclosed concepts. As part of this description, some of this disclosure's drawings represent structures and devices in block diagram form in order to avoid obscuring the novel aspects of the disclosed embodiments. In this context, it should be understood that references to numbered drawing elements without associated identifiers (e.g., **100)** refer to all instances of the drawing element with identifiers (e.g., **100*a*** and **100*b*).** Further, as part of this description, some of this disclosure's drawings may be provided in the form of a flow diagram. The boxes in any particular flowchart may be presented in a particular order. However, it should be understood that the particular flow of any flow diagram is used only to exemplify one embodiment. In other embodiments, any of the various components depicted in the flowchart may be deleted, or the components may be performed in a different order, or even concurrently. In addition, other embodiments may include additional steps not depicted as part of the flowchart. The language used in this disclosure has been principally selected for readability and instructional purposes and may not have been selected to delineate or circumscribe the disclosed subject matter. Reference in this disclosure to "one embodiment" or to "an embodiment" means that a particular feature, structure, or characteristic described in connection with the embodiment is included in at least one embodiment, and multiple references to "one embodiment" or to "an embodiment" should not be understood as necessarily all referring to the same embodiment or to different embodiments.

It should be appreciated that in the development of any actual implementation (as in any development project), numerous decisions must be made to achieve the developers' specific goals (e.g., compliance with system and business-related constraints), and that these goals will vary from one implementation to another. It will also be appreciated that such development efforts might be complex and time consuming but would nevertheless be a routine undertaking for those of ordinary skill in the art of image capture having the benefit of this disclosure.

For purposes of this disclosure, media items are referred to as "videos." However, in one or more embodiments, the media items referred to as "videos" could be any kind of media item including, but not limited to, audio/video media items, radio stations, streaming data items, podcasts, music videos, animations, video graphics, graphic overlays, or the like. Additionally, for purposes of this disclosure, data feeds of user device instructions, or directives, are referred to as "presentation tracks" or "presentation feeds." However, in one or more embodiments, the data feeds referred to as "presentation tracks" or "presentation feeds" could be any kind of data feed used to direct presentation of a broadcast which includes, but is not limited to, commands that direct presentation of the broadcast, camera source data, timestamp data, transition data, graphics data, or combinations or variations thereof.

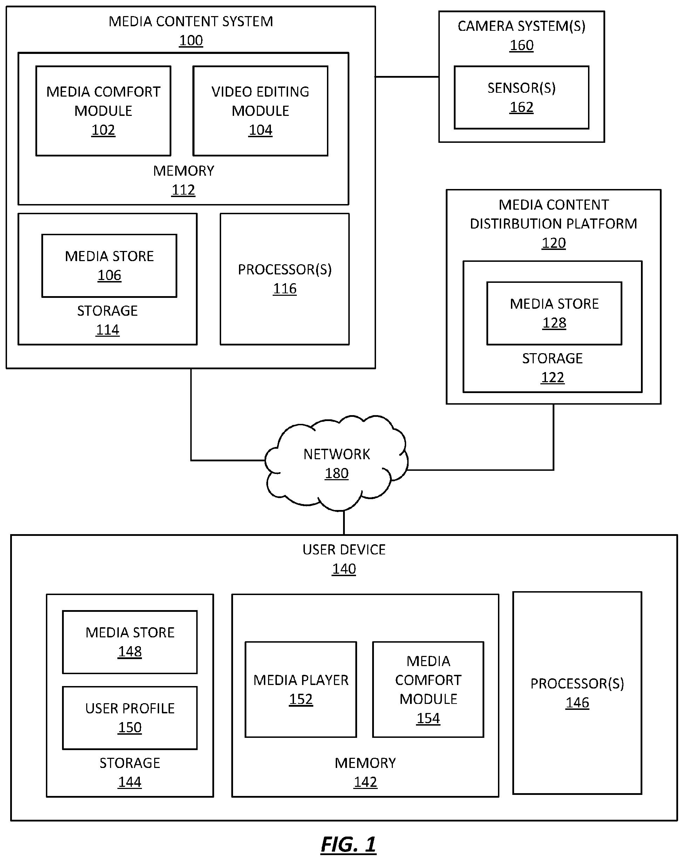

Referring to FIG. **1****,** a simplified block diagram is depicted of a media content system **100** communicably connected to a media content distribution platform **120** and a user device **140,** for example over a network **180.** User device **140** may be a multifunctional device, such as a set-top box, digital media player, mobile phone, tablet computer, personal digital assistant, portable music/video player, wearable device, or any other electronic device that includes a media playback system that can cause video content to be displayed on a high-definition screen.

Media content system **100** may include one or more servers or other computing or storage devices on which the various modules and storage devices may be contained. Although media content system **100** is depicted as comprising various components in an exemplary manner, in one or more embodiments, the various components and functionality may be distributed across multiple network devices, such as servers, network storage, and the like. Further, additional components may be used, or some combination of the functionality of any of the components may be combined. Generally, media content system **100** may include one or more memory devices **112,** one or more storage devices **114,** and one or more processors **116,** such as a central processing unit (CPU) or a graphical processing unit (GPU), or the like. Further, processor(s) **116** may include multiple processors of the same or different type. Memory **112** may include one or more different types of memory, which may be used for performing device functions in conjunction with processor **116.** For example, memory **112** may include cache, ROM, and/or RAM. Memory **112** may store various programming modules which may be executed by the processor(s) **116,** including media comfort module **102,** and video editing module **104.**

Media content system **100** may store media files, media file data, music catalog data, video catalog data, media or video clips, statistical data, graphics data, or the like. Additional data may include, but is not limited to alternate scenes, metadata files, or the like. Media content system **100** may store data in a media store **106** within storage **114.** Storage **114** may include one or more physical storage devices. The physical storage devices may be located within a single location, or may be distributed across multiple locations, such as multiple servers.

In some embodiments, media content system **100** may be communicatively coupled to one or more camera system(s) **160.** Camera system(s) **160** may include one or more cameras of a same or different type. The cameras may have different capabilities, such as zoom capabilities, resolution capabilities, connectivity capabilities, or the like. Each camera may include audio and video capture capabilities. In some embodiments, one or more of the camera system(s) **160** may be configured to capture immersive content, such as 3D media. For example, the camera system(s) may include a stereocamera system from which immersive content can be produced. In some embodiments, camera system(s) **160** may include one or more sensor(s) **162.** In some embodiments, sensor(s) **162** may include one or more imaging sensors, as well as other sensors configured to capture motion data from which camera motion parameters can be determined, and/or other sensors which may provide measured characteristics of the environment of the camera capturing the immersive content. Examples of sensor(s) **162** include inertial motion units (IMUs), gyroscopes, accelerometers, magnetometers, and/or other sensors configured to capture sensor data related to changes in camera position and/or orientation. Camera system(s) **160** may be connected directly to streaming media service **100,** such as over a local area network, over network **180,** or a combination or variation thereof.

Returning to the media content system **100,** the memory **112** includes modules that include computer readable code executable by processor **116** to cause the media content system **100** to perform various tasks. As depicted, the memory **112** may include a media comfort module **102** and a video editing module **104.** According to one or more embodiments, the video editing module 104 may be configured to generate and manage media content, such as content captured from camera system(s) **160.** Video editing module **104** may store media content on media store **106** of storage **114** for subsequent retrieval. Portions of the media content may be stored on media store **106,** such as media clips, highlights, snippets, alternative scenes, or the like. In one or more embodiments, the video editing module **104** may cause display of a graphical user interface (GUI) to receive input from a user to edit video media content displayed by the GUI. The user may interact with the GUI of video editing module **104** via a variety of methods including, but not limited to, physical touch, touchless gestures, and/or retinal tracking. Video editing module **104** may receive audio and video data feeds from a plurality of sources, such as media store **106,** camera system(s) **160,** or a combination thereof.

Media comfort module **102** may be configured to receive motion sensor data from sensor(s) **162,** and determine comfort metrics. The comfort metrics may correspond to measurements of camera motion, content affecting a user's comfort, or the like. In some embodiments, media comfort module **102** may compare the comfort metrics to predefined motion and comfort threshold levels to identify a motion classification, determine whether a motion threshold is exceeded, or the like. For example, media comfort module **102** may be configured to generate a classification for an immersive media item, portions (such as scenes) of an immersive media item, or the like. The classification may indicate a relative motion level, such as low, medium, high, or the like. In addition, or alternatively, the media comfort module **102** may track a threshold comfort level, for example based on motion information or motion parameters, to determine whether a threshold motion is exceeded. In some embodiments, the media comfort module **102** may additionally determine other comfort parameters, such as camera pose data and phobia data. Camera pose data may include stationary characteristics of a camera in its environment. This may include, for example, scene origin point, camera scene position, altitude above sea level, height above ground level, location data, and the like. Other examples include proximity to other objects in the scene.

Video editing module **104** may provide media content to one or more devices for preview during capture, such as a head-mounted device or other playback device. For example, video data feeds may be received in real time, or near real time, while content is captured. In some embodiments, the media comfort module **102** may cause an adjustment to the preview video. For example, if the media comfort module **102** determines that a comfort metrics are not satisfied, then the immersive video may be replaced by a notification during preview. In doing so, a viewer of the preview track during production may avoid a poor or unpleasant preview viewing experience.

The media comfort module **102** made generate a metadata track for the immersive media item indicating comfort information, such as a motion comfort level, motion events, phobia events, camera motion information, or the like. The metadata track may be provided along with the immersive media item for playback. This may include, for example, a classification of camera motion for a particular portion of the immersive media item, camera motion information such as change in position, orientation, or the like, from which image data may be modified to adjust comfort metrics, or the like. In some embodiments, the media comfort module **102** may additionally generate metadata tracks for any alternative scenes which are captured for the immersive media item.

According to one or more embodiments, the media content system **100** may provide the immersive media item, alternative scenes, and/or metadata to a media content distribution platform **120** for distribution to one or more playback devices. In some embodiments, the media content distribution platform may publish the immersive media item such that the immersive media item is available to playback devices, such as user device **140.** In some embodiments, media content distribution platform **120** may include one or more servers or other computing or storage devices **122** on which the various modules and storage devices may be contained. Although media content distribution platform **120** is depicted as comprising a single storage **122** and media store **128** in an exemplary manner, in one or more embodiments, the various components and functionality may be distributed across multiple network devices, such as servers, network storage, and the like. Further, additional components may be used, or some combination of the functionality of any of the components may be combined. Generally, media content distribution platform **120** may include one or more storage devices **122.** Storage **122** may include one or more physical storage devices. The physical storage devices may be located within a single location, or may be distributed across multiple locations, such as multiple servers. Media content distribution platform **120** may store media files, media file data, music catalog data, video catalog data, media or video clips, statistical data, graphics data, or the like, in media store **128.** Additional data may include, but is not limited to, presentation track data, dynamic metadata files, or the like. In some embodiments, the media content distribution platform may provide a badge or other indicator of high motion content such that a user browsing items hosted by the media content distribution platform **120** will be notified of items having a native high motion content. That is, the notification may indicate which immersive media items have a high motion content and may require a corrective action to satisfy user-specific comfort metrics.

User device **140** may be an electronic device on which immersive media can be viewed. For example, user device **140** may include a mobile device, a wearable device such as a head-mounted device, or other media player configured to present immersive content. User device **140** may include one or more memory devices **142,** one or more storage devices **144,** and one or more processor(s) **146,** such as a central processing unit (CPU) or a graphical processing unit (GPU). Further, processor(s) **146** may include multiple processors of the same or different type. Memory **142** may include one or more different types of memory, which may be used for performing device functions in conjunction with processor **146.** For example, memory **142** may include cache, ROM, and/or RAM. Memory **142** may store various programming modules that include computer readable code executable by processor **146** to cause the user device **140** to perform various tasks. As depicted, the memory **142** may include a media player **152** and a media comfort module **154.** According to one or more embodiments, media player **152** may provide media playback of content, such as video data content received from a content delivery service such as media content distribution platform **120,** camera system(s) **160,** or streaming media service **100.**

According to one or more embodiments, media player **152** may be configured to request media content for media content distribution platform **120.** The request may be transmitted over network **180.** In response, user device **140** may receive a particular immersive media item, along with ancillary content, such as alternative scenes, metadata, and the like. Alternatively, the request may include information regarding user specific comfort parameters. In response, the media content distribution platform **120** may determine whether alternative scenes or other content should be provided, and provide the immersive media content and additional items determined to be needed based on the user specific comfort parameters. For example, the media content distribution platform **120** may only distribute alternative scenes if it is determined that a user specific comfort level for user device **140** would be exceeded by the immersive media content. According to one or more embodiments, the user specific comfort parameters may be stored as part of user profile **150** in storage **144.** The user profile **150** made be used to manage user comfort parameters, such as a user specified comfort level or the like.

Once the immersive media item and ancillary content are received, the media player **152** may work in conjunction with the media comfort module **154** to provide a personalized viewing experience of the immersive media item which satisfies a user's comfort metrics. For example, the media comfort module **154** may determine whether a local user's comfort metrics would be exceeded. The motion level of the content may be determined, for example from metadata corresponding to the media item, or may be determined from the media item at the playback device. For example, motion data, such as motion scores, motion vectors, or the like, may be generated based on motion within the scene. In response to a determination that the user's comfort metrics would be exceeded, the media comfort module **154** may perform a corrective action on the immersive media item in order to cause the comfort metrics of the immersive media item to satisfy the user specific comfort metrics. As an example, if a particular scene exceeds a user's comfort metrics, the scene may be replaced with an alternative scene hosted by the media content distribution platform **120.** As another example, the portion of the immersive media item which exceeds the comfort metrics may be adjusted based on camera motion information encoded in the metadata to adjust the media item such that the adjusted media item satisfies a user's comfort metrics. This may include applying a prescriptive motion to the image data by warping the image dataor reprojecting the image data, changing a level of immersiveness of the media item (such as switching from a 3D view to a 2D view), changing a field of view of the image data, or the like. As another example, a particular scene may be omitted, obstructed with a notification, or the like. In some embodiments, the immersive content, ancillary content, and/or adjusted immersive content may be stored for later playback on media store **148.**

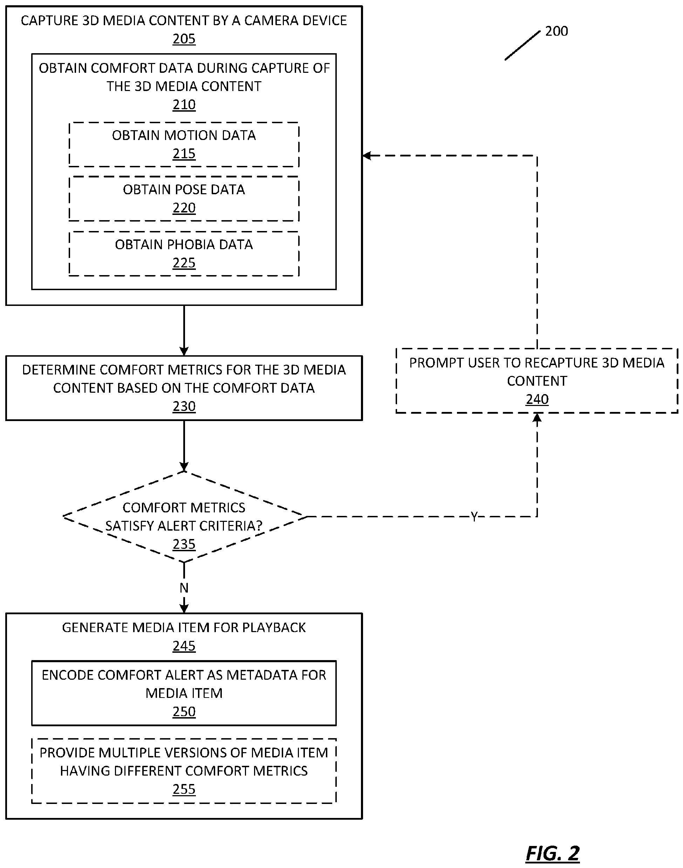

Turning to FIG. **2****,** a flowchart **200** is presented for producing immersive content, according to one or more embodiments. In particular, flowchart **200** shows an example technique for producing immersive content along with comfort information, in accordance with one or more embodiments. For purposes of explanation, the following processes will be described in the context of FIG. **1****.** However, the various actions may be taken by alternate components. In addition, the various actions may be performed in a different order. Further, some actions may be performed simultaneously, and some may not be required, or others may be added.

The flowchart **200** begins at block **205,** where 3D media content is captured by one or more camera devices. The one or more camera devices may include one or more stereoscopic camera devices configure it to capture image data which is presented in an immersive context. At block **210,** capturing the 3D media content includes obtaining comfort data from the camera device capturing the media content. As described above, the comfort data may include sensor data from the one or more cameras or camera systems indicating characteristics of the camera position and/or orientation in the form of pose data **220.** In some embodiments, comfort data may include motion data, such as changes in the camera position and/or orientation, as shown at bock **215.** The motion data may be captured or derived from sensor data, for example, from an IMU, gyroscope, accelerometer, or some combination thereof. Further, as shown at block **225,** comfort data may include phobia data. Phobia data may identify detected objects or events in a captured scene which belong to a predefined classification for which comfort data should be generated. This may happen, for example, for objects or experiences which are detected in image data captured by the camera system(s).

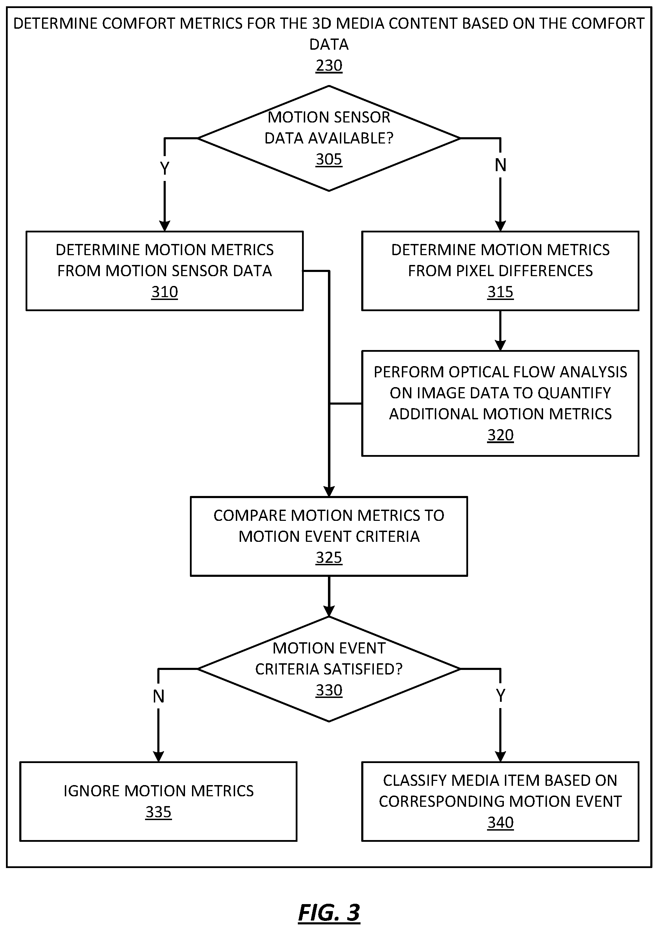

The flowchart **200** continues at block **215,** where comfort metrics are determined for the 3D media content based on the comfort data. The comfort metrics may be determined in real time as the media content is captured, and/or after the media content is captured. In some embodiments, the comfort metrics may indicate how much motion is present in the scene, abrupt changes in motion in the scene in the form of motion events, phobia events, or the like. Determination of the comfort metrics will be described in greater detail below with respect to FIGs. **3-4****.**

Optionally, at block **235,** a determination is made as to whether the comfort metrics satisfy alert criteria during production. For example, as image content is captured, a device may determine a motion parameters, phobia parameters, or the like for the captured content. The comfort metrics may be considered to satisfy the alert criteria if a motion event or phobia event is identified. As another example, the comfort metrics may be considered to satisfy the alert criteria if one or more of the comfort metric values satisfy a predefined threshold for that comfort metric. If the alert criteria is satisfied, then the flowchart proceeds to block **240,** and a user is prompted to recapture the 3D media content. The recaptured 3D media content may then be used as a replacement scene in the immersive media item, or may be provided as an alternative scene as part of ancillary content for the immersive media item. Accordingly, a playback device can then choose between the scene that satisfied the alert criteria, and a scene which has been recaptured at block **240.** The flowchart **200** then returns to block **205,** where the 3D media content is recaptured.

Returning to block **235,** if the comfort metrics are not determined to satisfy an alert criteria, or if optional block **235** is skipped, then the flowchart concludes at block **245.** At block **245,** the immersive media item is generated for playback. In some embodiments, the immersive media item may be generated for playback using a video editing tool to finalize a video media item. In addition, as shown at block **250,** generating the media item for playback includes encoding the comfort data as metadata for the media item. As described above, the comfort data may include camera motion information which can be used to adjust the captured video content to perform a corrective action, or an indication of a portion of the media item for which the alert criteria was satisfied at block 235. Additionally, or alternatively, the encoded comfort data may include at least some of the comfort metrics determined at block **230.** As described above, the metadata may be generated for the immersive content, as well as ancillary content, such as alternative scenes captured for the immersive media item. Optionally, as shown at block **255,** multiple versions of the media item may be generated having different comfort metrics. For example, rather than providing a single immersive media item with ancillary content, such as alternative scenes or the like, different full versions of the immersive content may be generated using the alternative scenes, thereby providing multiple versions of a same immersive media item which satisfy different comfort thresholds.

Turning to FIG. **3****,** a flowchart is detected of an example technique for determining comfort metrics, in accordance with one or more embodiments. In particular, FIG. **3** shows an example of determining at least some of the comfort metrics described above with respect to block **230** of FIG. **2****.** For purposes of explanation, the following processes will be described in the context of FIG. **1****.** However, the various actions may be taken by alternate components. In addition, the various actions may be performed in a different order. Further, some actions may be performed simultaneously, and some may not be required, or others may be added.

The flowchart begins with a determination at block **305** as to whether motion sensor is available. In some embodiments, the one or more camera system(s) **160** may capture various types of sensor data. Motion sensor data may be determined, for example, if an IMU or the motion sensor is operable. As another example, motion sensor data may be available, for example, based on a confidence value for the captured motion data satisfying a predefined confidence threshold. For example, the confidence value may indicate a likelihood that a calibration of the motion sensor is accurate.

If a determination is made that the motion sensor data is available, then the flowchart proceeds to block **310,** and motion metrics are determined from the motion sensor data. Motion metrics may indicate various measurements or classification of camera motion based on the motion sensor data. Motion metrics may include data used to determine motion, such as camera pose and/or orientation. Other examples include angular rotation, accelerometer data, which may be filtered relative to earth's gravity, magnetic field, and heading. The motion metrics may be determined, for example, based on measurements of change of position and/or orientation of the camera causing the captured image to move in the frame or series of frames. In some embodiments, the motion metrics may additionally be based on camera settings, such as zoom, and/or image content, such as how fast an object is moving in the scene. The motion metrics may include a weighted metric based on various considerations, including changing camera position or orientation, movement of an object in the scene, or the like.

Returning to block **305,** if a determination is made that motion sensor data is not available, the system can generate some motion metrics through image analysis. Thus, the flowchart proceeds to block **315,** and motion metrics are determined from pixel differences across frames in the media content. In some embodiments, a motion score can be determined from the pixel comparison. The motion score may indicate a magnitude and/or direction of a motion. The flowchart proceeds to block **320,** where optical flow analysis is performed on the image data to quantify additional motion metrics. The additional motion metrics may include, for example, rotational motion, perpendicular motion, horizontal pan, vertical pan, and the like.

After block **320,** or after block **310,** the flowchart proceeds to block **325,** and the motion metrics are compared to motion event criteria. In some embodiments, motion event criteria may be defined by one or more threshold values for one of more of the motion metrics. As another example, motion event criteria may correspond to a set of predefined motion events. That is, a particular motion event may be detected based on a predefined set of motion criteria being satisfied. The motion event can be detected based on one or a combination of motion metric values. Example of motion event include:
- level departure - the camera is no longer in its nominal horizontal level state, as calibrated by the user;
- tumble - the camera orientation changed from a steady state to a high rotation rate on at least two axis;
- drop - the camera experiences rapid vertical acceleration from a steady state;
- shock - the camera was physically hit by an object at high speed, from any direction;
- roll - the camera experience rapid roll movement from a steady state;
- pan - the camera experiences rapid pan movement from a steady state;
- tilt - the camera experiences rapid tilting movement from a steady state
- heave - the camera detects a period of cyclical vertical up and down motion after a steady state period;
- sway - the camera detects a period of cyclical lateral and/or longitudinal motion after a steady state period; and
- vibration - the camera detects high or low amplitude, but high frequency vibration in any direction.

The flowchart proceeds to block **330,** where a determination is made as to whether motion metrics satisfy the motion event criteria. The criteria may differ for each motion event, and may correspond to threshold values or other predefined values which define the event, as described above. If a determination is made that motion event criteria are not satisfied, then the flowchart concludes at block **335,** and the motion metrics are ignored with respect to motion events. That is, the motion metrics may be used for other types of event determinations.

Returning to block **330,** if a determination is made that the motion event criteria is satisfied, then the flowchart concludes at block **340,** and the media item is classified based on the corresponding motion event, such as the motion event for which the motion event criteria were satisfied. According to some embodiments, each of the predefined motion events may be associated with an event identifier, which may be encoded into metadata in order to identify the motion event type. In some embodiments, the entire media item may be classified based on the motion event. Additionally, or alternatively, a particular scene, or portion of the media item, may be classified based on the motion event. In some embodiments, by classifying a particular scene based on the motion event, the portion of the media item containing the motion event can be identified in order to resolve the motion event at the playback side.

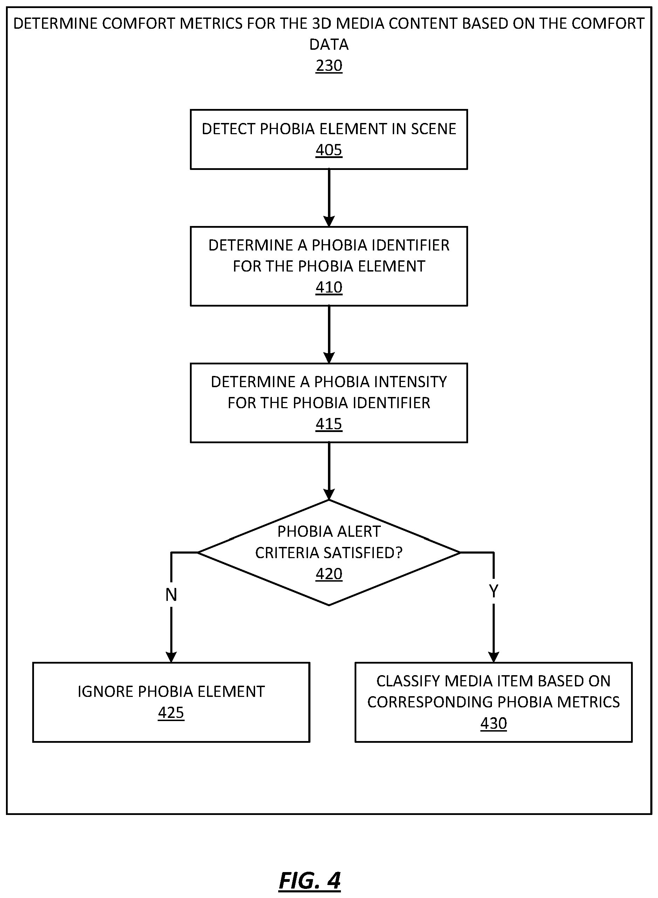

Turning to FIG. **4****,** a flowchart is detected of an example technique for determining phobia metrics, in accordance with one or more embodiments. In particular, FIG. **4** shows an example of determining at least some of the comfort metrics described above with respect to block **230** of FIG. **2****.** Some viewers may be negatively impacted based on individual phobias. Although phobias differ among viewers, some phobias are shared among larger portions of the viewers and, thus, can be identified for purposes of viewing comfort. For purposes of explanation, the following processes will be described in the context of FIG. **1****.** However, the various actions may be taken by alternate components. In addition, the various actions may be performed in a different order. Further, some actions may be performed simultaneously, and some may not be required, or others may be added.

The flowchart begins at block **405,** where phobia elements are detected in the scene. In some embodiments, objects or characteristics of a scene may be detected that correspond to a set of predefined phobias. This may include certain animals or insects, certain contexts of the camera such as being underwater, high above the ground, or in an enclosed space, or certain situations, such as within a crowd or the like. Examples of phobia types include:
- heights - being high above the round with feet on a rigid object, such as a balcony, top of a ladder, or in the basket of a hot air balloon;
- flying/floating - being high above the ground with nothing to stand on;
- personal space - the camera captures the scene such that the viewer appears close to another person;
- snake - a snake is visible in the scene;
- spider - a spider is visible in the scene;
- rat - a rat is visible in the scene;
- dog - a dog is visible in the scene;
- confined spaces - the camera is within an enclosed space apparent to the viewer; and
- being underwater - the camera captures a shot from an underwater perspective.

The flowchart proceeds to block **410,** where a phobia identifier is determined for the particular phobia. For example, each of the predefined phobias may be associated with a particular identifier. In some embodiments, multiple phobia types may be associated with a common identifier, such as animal phobias or the like.

At block **415,** a phobia intensity is determined for the phobia identifier. The phobia intensity may correspond to a value for the phobia identifier based on how apparent the phobia is in the scene. For example, a close-up view of a live snake will have a higher intensity value than a rubber snake on a shelf in a background. To that end, intensity may be based on the type of phobia as well as how that phobia element appears in the scene. Thus, the determination for intensity may be based on a combination of features such as proximity, elapsed time the phobia is visible, and the like.

The flowchart proceeds to block **420,** where a determination is made as to whether a phobia alert criteria is satisfied. The criteria may differ for each phobia event, and may correspond to threshold values, such as phobia scores, or other predefined values which define the event. For example, the phobia type and/or phobia intensity may be used to determine a phobia score for the phobia event. If a determination is made that phobia alert criteria are not satisfied, then the flowchart concludes at block **425,** and the phobia element is ignored.

Returning to block **420,** if a determination is made that the motion event criteria is satisfied, then the flowchart concludes at block **430,** and the media item is classified based on the corresponding phobia event, such as the phobia type for which the phobia alert criteria were satisfied. According to some embodiments, each of the predefined phobia types may be associated with a phobia identifier, as described above with respect to block **410.** The phobia identifier, intensity score, and/or phobia score may be encoded into metadata in order to identify the phobia event type. In some embodiments, the entire media item may be classified based on the phobia event. Additionally, or alternatively, a particular scene, or portion of the media item, may be classified based on the phobia event. In some embodiments, by classifying a particular scene based on the phobia event, the portion of the media item containing the phobia event can be identified in order to resolve the phobia event at the playback side.

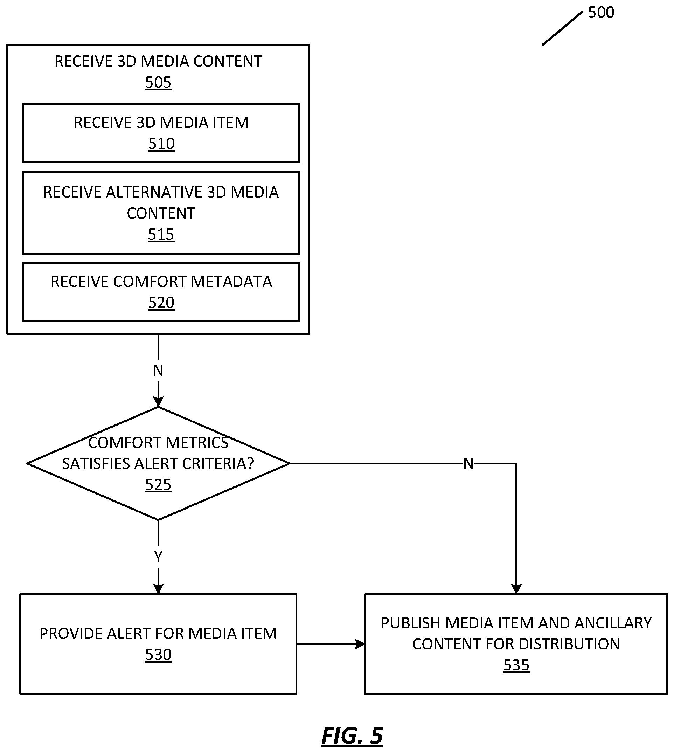

In some embodiments, the different versions of the immersive media item, or the immersive media item and the encoded metadata and other ancillary items, may be published to a media distribution platform to be made available to playback devices. FIG. **5** shows, in flowchart form, a technique for providing immersive media on a media distribution platform, according to one or more embodiments. For purposes of explanation, the following processes will be described in the context of FIG. **1****.** However, the various actions may be taken by alternate components. In addition, the various actions may be performed in a different order. Further, some actions may be performed simultaneously, and some may not be required, or others may be added.

The flowchart **500** begins the block **505,** where 3D media content is received at the media distribution platform. In some embodiments, the 3D media content may be received when a content creator or other user associated with the creation or generation of immersive media content uploads or otherwise provides the 3D media content to the platform for publication. According to our embodiments, the 3D media content may include an immersive media item, such as a 3D media item, received at block **510.** In addition, ancillary content may additionally be received, such as, at block **515,** alternative 3D media content. This may include, for example, alternate scenes or other portions of media content which may be used to replace portions of the immersive media item in order to adjust comfort metrics for the immersive media item. In some embodiments, the alternative 3D media content may include, for example, overlays or other graphical items used to obstruct the motion or content in the scene, thereby resolving comfort issues for a user during playback.

Additionally, receiving 3D media content at block **505** also includes receiving comfort metadata at block **520.** The comfort metadata may include a metadata track that includes data indicative of camera motion for the immersive media item. In some embodiments, the comfort metadata may be a timed metadata track which can be aligned with the immersive media item in order to provide comfort information for different portions of the immersive media item. In some embodiments, the comfort metadata may include metrics such as camera motion information indicative of how a camera moved during capture of one or more portions of the immersive media item, phobia metrics for the scene, or the like. That is, the comfort metadata may include a determined comfort score, as well as data indicative of various comfort parameters such as motion, phobias, or the like. For example, with respect to motion metrics, the metadata may include a measure of the camera motion, such as velocity, direction, rotation, acceleration, and the like.

The flowchart **500** continues to block **525,** where a determination is made as to whether comfort metrics from the comfort metadata satisfy alert criteria. In some embodiments, the criteria at block **525** may refer to one or more thresholds or other conditions for which one or more badges or other indicators are appended to a listing of the 3D media content for a playback device. For example, if the comfort metadata indicates that the immersive media item contains a high motion scene or event, the comfort metrics may be determined to satisfy the alert criteria at block **525.** In some embodiments, the platform may be configured to perform additional or alternative determinations for whether to identify comfort information for the immersive media item in a listing of the immersive media item by the platform. For example, the platform may include one or more programming modules configured to ingest the comfort metadata from block **520,** and make a determination as to whether one or more indicators should be provided. The determination may be made, for example, based on an average comfort score, a maximum score for the immersive media content, a relative amount of the media item associated with a high comfort score, or the like.

If the determination is made at block **525** that the comfort metrics satisfy the alert criteria, then the flowchart **500** proceeds to block **530,** and the platform provides an indicator for the media item, such as an indicator related to high motion, or an indicator associated with a particular phobia. The indicator may be a badge or other visual indicator, or textual indicator. The flowchart **500** then concludes at block **535,** where the media item and the ancillary content are published for distribution. The media item and ancillary content are also provided for distribution in response to a determination that the comfort metrics do not satisfy the alert criteria at block **525.** In some embodiments, the media item may be published to the platform with an indication that the media item is available for streaming or download. In some embodiments, the media item may be presented along with information about ancillary data, such as the availability of alternative scenes or other content which can be used to adjust the comfort metrics for the media item.

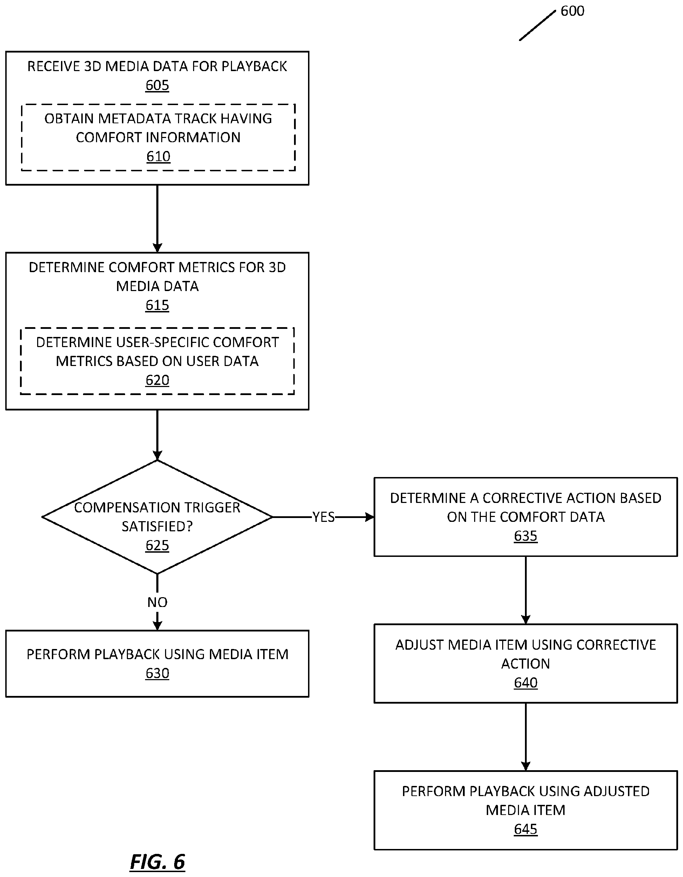

As described above, a playback device can request the immersive media item for playback, for example by streaming or download. FIG. **6** shows, in flowchart form, an example method for dynamically adjusting immersive content based on motion data, according to one or more embodiments. For purposes of explanation, the following processes will be described in the context of FIG. **1****.** However, the various actions may be taken by alternate components. In addition, the various actions may be performed in a different order. Further, some actions may be performed simultaneously, and some may not be required, or others may be added.

The flowchart **600** begins at block **605,** where a playback device receives the 3D media data, for example, from a media distribution platform. As shown at block **610,** receiving the 3D media data may optionally include obtaining a metadata track having comfort information. In addition, other ancillary items for the 3D media data may be received, such as alternative 3D media data or the like. According to some embodiments, the metadata track may be a timed metadata track configured to align comfort information with the 3D media data, such as an immersive media item.

In some embodiments, the 3D media may be captured by multiple cameras. For example, the 3D media may include stereoscopic media, having a left eye image and a right eye image. As another example, the 3D media may include immersive media in the form of multiview content, such that different parts of a scene are captured by different cameras. In these cases, the metadata may further include information about the camera that captured the media. For example, while the general lens geometry may be known, manufacturing differences can result in different lenses having different optical characteristics, leading to different optical defects. These optical characteristics may result in distortions during rendering and playback. To that end, camera-specific adjustment information may be provided in the form of lens-specific calibration data, which can be used to resolve camera-specific optical detects. In some embodiments, the lens-specific calibration data may be provided in the metadata such that the playback device can adjust or refine the decoded image data to address the defects. The lens-specific calibration data may be lens-specific, and may address issues in the lens itself, sensor to lens positioning, or the like, which may be determined during a calibration stage for the camera. According to one or more embodiments, the lens-specific calibration data may be encoded in the metadata as parametric functions or other geometric information such as a mesh representation. To that end, the 3D media data may be received with an indication of a camera from which the media data, or a particular portion of media data, was captured. The metadata track may include lens-specific calibration data related to cameras that captured the 3D media data.

The flowchart **600** proceeds to block **615,** where comfort metrics are determined for the media data. According to some embodiments, if received, the comfort metrics may be determined from the metadata track. Alternatively, the comfort metrics may be determined based on characteristics of content in the media data. For example, the media data may be analyzed for motion in the scene or common phobias in the scene. The motion may be determined, for example, in the form of motion vectors, motion scores, or the like. In some embodiments, the comfort metrics may be determined prior to playback, and may be determined for the entire immersive media item. Alternatively, the comfort metrics may be determined from the media track dynamically, for example during playback. In some embodiments, the comfort metrics may include a score determined from the media content system **100,** or the media content distribution platform **120.** In some embodiments, the comfort metrics may be agnostic as to user specific parameters. Additionally, or alternatively, as shown at optional block **620** the user device **140** may determine user-specific comfort metrics, for example, based on the provided comfort metrics in the metadata track, the camera motion information encoded in the metadata track, motion detected within the media data and/or user specified parameters. For example, user-specific parameters for determining comfort metrics may be associated with a user profile, such as a personal threshold for high motion, personal phobias, or the like.

The flowchart proceeds to block **625,** where a determination is made as to whether a compensation trigger is satisfied. The compensation trigger may be one or more parameter values and may be based on one or more of user-specific comfort metrics, a user agnostic comfort score from the metadata track, camera motion information from the metadata track, or the like. The compensation trigger may therefore indicate one or more parameters which indicate that corrective action should be taken on the immersive media item prior to presenting the immersive media item to the user. The compensation trigger may be a comfort score indicating a threshold level of motion. In some embodiments, the motion compensation may differ based on whether the comfort metrics are derived from the metadata, from motion or content in the scene, or some combination thereof. For example, a user may be more or less sensitive to motion in a scene as opposed to camera movements.

In some embodiments, the determination may be made in real time, for example, during playback of the immersive media item. Alternatively, the determination may be made prior to playback beginning. If the determination is made at block **625** that a compensation trigger is not satisfied, then the flowchart **600** concludes at block **630,** and playback is performed using the immersive media item as provided by the platform. In some embodiments, the process described a flowchart **600** is performed continuously during playback and, as such, the flowchart **600** may return to block **605,** where the determination is made for additional segments of the immersive media content.

Returning to block **625,** if a determination is made that a compensation trigger is satisfied, then the flowchart **600** proceeds to block **635,** where a corrective action is determined based on the comfort data. The corrective action may include, for example, warping or otherwise adjusting the video content to compensate for camera motion, swapping or removing video content causing the compensation trigger to be satisfied, presenting a notification to a user regarding the compensation trigger being satisfied, or the like.

The flowchart **600** proceeds to block **640,** where the media item is adjusted using the corrective action. For example, a scene which causes the compensation trigger to be satisfied may be replaced with an alternative scene provided with the 3D media data. In another example, the camera motion corresponding to the video content causing the motion compensation trigger to be satisfied can be identified. The corrective action may include using the camera motion information to compensate for the camera motion in order to reduce the motion of the scene. For example, the image data may be filtered or warped so as to include less motion, such as reprojecting image data in an opposite direction of the camera motion to compensate for the camera motion, thereby applying a prescriptive motion to the image data. As another example, if the presence of a phobia causes the compensation trigger to be satisfied, a badge or other alert may be provided to a user prior to the scene.

The flowchart **600** concludes that block **645,** where playback is performed using the adjusted media item. The playback may be performed on a user device configure it to support immersive media playback. Accordingly, the adjusted media item may differ from an immersive media item as provided by the platform. Further, the adjusted media item played at one user device may differ from a version of the immersive media item played at another playback device, for example, based on differing compensation triggers for different users.

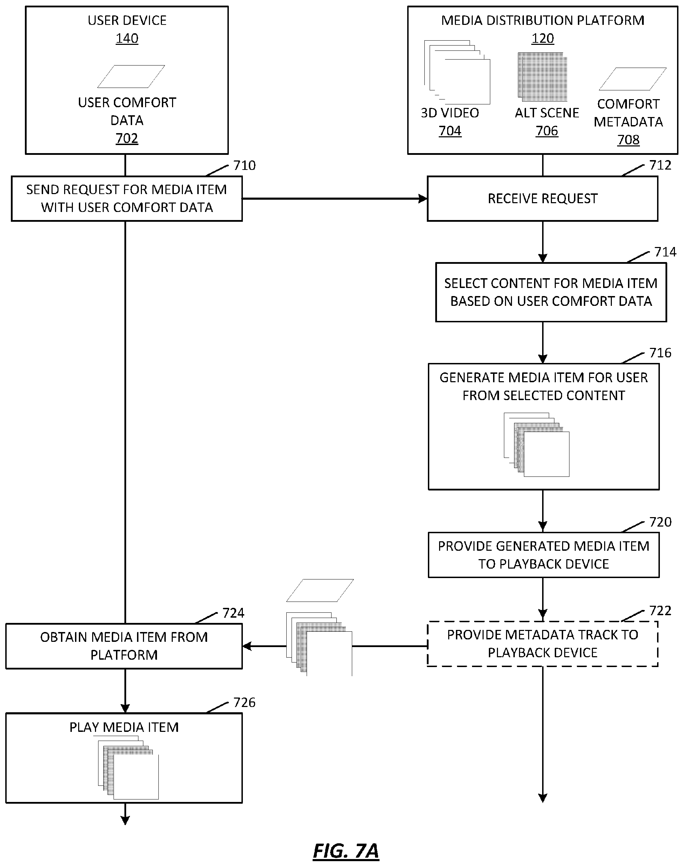

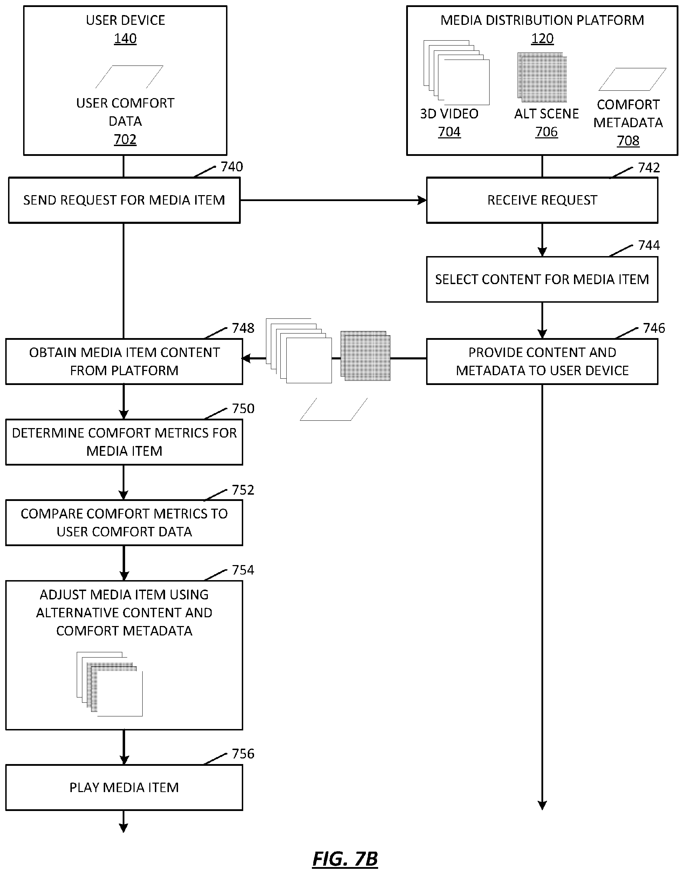

FIGs. **7A-7B** show, in flow diagram form, example processes for utilizing comfort metadata, according to one or more embodiments. In particular, FIGs. **7A-7B** show example techniques for using comfort metadata to adjust an immersive media item for playback. It should be understood that each of FIG. **7A** and FIG. **7B** depict example embodiments of the techniques described herein, and are not intended to limit the scope of the disclosure. For example, various processes may be depicted as being performed by particular devices, for example as described above with respect to FIG. **1****.** However, in some embodiments, the various processes may be performed by alternative or additional devices.

Turning to FIG. **7A****,** an interplay is depicted between a user device **140** and a media distribution platform **120.** In some embodiments, the user device **140** may include user information, such as user comfort data **702.** User comfort data **702** may correspond to user-specific comfort parameters. In some embodiments, the user-specific comfort parameters may indicate a motion level selected by a user, and/or may be at least partially automatically determined, for example based on physical characteristics of the user, such as eye measurements, age, and the like. Further, the user-specific comfort parameters may indicate particular phobia types or phobia identifiers, and/or intensity values for the phobias for which a corrective action should be performed. Media distribution platform **120** may host an immersive media item, such as 3D video **704.** In addition, media distribution platform **120** can host ancillary content for the immersive media item, such as alt scene **706** and comfort metadata **708.** In some embodiments, alt scene **706** may be an alternative version of a portion of the 3D video **704.** Comfort metadata **708** may include a timed metadata stream which can be used to align motion information for the 3D video **704** and/or alt scene **706** using a timed metadata track. The comfort metadata **708** may include, for example, comfort metrics for one or more portions of the video content, camera motion information for a camera that captured the video content, or the like.

The flow diagram begins at block **710,** where the user device **140** sends a request for a particular media item. The request may include an indication of user comfort data **702.** For example, a user at user device **140** may access a media distribution platform **120** and select and immersive media item for playback. By selecting the media item, the request may automatically include user comfort data **702.** Alternatively, a user of the user device **140** may include user comfort data **702** in the request.

At block **712,** the media distribution platform **120** receives the request. At block **714,** the media distribution platform **120** can select content for the requested media item based on the user comfort data **702.** For example, the media distribution platform **120** can determine whether the 3D video **704** satisfies user comfort data **702.** If 3D video **704** does not satisfy user comfort data **702,** such as if an alert trigger would be satisfied based on the 3D video **704** and the user comfort data **702,** the 3D video **704** may be adjusted with a corrective action to adjust the comfort metrics of the 3D video **704.** Thus, the media distribution platform may select alt scene **706** along with 3D video **704** to satisfy the user comfort data **702.**

The flow diagram proceeds to block **716,** where the media item is generated for the user device **140** from the selected content. For example, the media distribution platform may select an alternate version of the 3D video that includes the alternate scene **706,** or may generate a version of the 3D video **704** that includes alt scene **706.** For example, the video frames corresponding to a particular scene having a motion event corresponding to high motion may be replaced with video frames corresponding to alt scene **706,** which may have reduced motion. As a result, an alternate version of 3D video **704** may be generated which includes alt scene **706.** As another example, media content may be adjusted so as to address comfort metrics. This may include, for example, shrinking a field of view of a scene to crop a portion of the scene causing a conflict with user comfort data. As another example, the media may be adjusted by changing an immersiveness of the data. For example, the media content may switch from a fully immersive view to a more limited view, such as through a portal, or a windowed view, or 3D media may be converted to 2D media, for example, by showing a single view of a stereo pair.

At block **720,** the generated media item from block **716** is provided to the playback device, such as user device **140.** Optionally, at block **722,** the comfort metadata track **708** may also be provided to the user device **140.** In some embodiments, the comfort metadata may not be needed by the user device **140,** as the 3D video **704** has already been modified to adjust for the user comfort data **702.** However, in some embodiments, comfort metadata **708** may be used at user device **140** to identify replacement, or alternative, scenes in the received version of the 3D video **704,** to adjust other portions of the 3D video as received by the user device, or the like.

In some embodiments, the metadata track may be modified or generated to incorporate information that may be used by a playback device, such as user device **140,** for rendering and/or presenting the media item. For example, the metadata track may contain lens-specific calibration data for each of the cameras that captured the media content, such as 3D video **704** and alt scene **706.** For example, the 3D video may be captured by a multicamera system such that the image data is obtained by multiple lenses, each with their own distortions and optical distortions. To that end, the metadata track may include lens-specific calibration for each camera source. If desired, the lens-specific calibration data may be provided as separate metadata, for example the media distribution platform or other server may, as an initial step, provide lens calibration data for each of the cameras to the playback device; the media item may identify (e.g., via timed metadata) to the playback device which lens calibration data to use for playback of the media or any given media frame(s).

According to one or more embodiments, the metadata may include other information to adjust the media item for playback to address comfort metrics. For example, if the media item was generated to incorporate playback adjustments, instructions for those playback adjustments may be incorporated into the metadata. This may include, for example, an instruction to apply a treatment to frames of a portion of the media item, such as changing an immersiveness of the media item to a window or portal view, or to show a single view of a stereo pair to transform 3D media into 2D. Changes to the field of view may be instructed, for example, based on a spherical dynamic mask. The mask may indicate geometric information, such as a mesh, parametric functions, vertices, or the like that define an active volume for playback. In some embodiments, the playback adjustment instructions may be encoded in metadata with a reference to the particular frame or set of frames to which the adjustment should be applied. As another example, the instructions may be encoded in the form of a timed metadata track for use during playback. For example, the spherical dynamic mask may be encoded as a timed metadata track, for example on a per-frame basis.

The flow diagram proceeds to block **724,** where the media item is obtained from the platform **120.** Optionally, the metadata track is additionally received from the platform **120.** The flow diagram concludes at block **726,** where the media item is played at the user device **140.** Notably, the media item played at block **726** differs from 3D video **704.** However, a user at another user device, for which user comfort data is satisfied by 3D video **704** may have a different viewing experience, and thus may view 3D video **704** without adjustment, such as without the alternative scene. For example, a different user device may be associated with a higher threshold for media comfort data, and therefore will receive the unaltered version of 3D video **704** from the media distribution platform **120.**

According to one or more embodiments, presentation of the media item at block 726 may include rendering the media item in accordance with the metrics and/or instructions encoded in the metadata. For example, the content for the media item may be adjusted at playback in accordance with the instructions to change a field of view, level of immersiveness, or the like. Further, additional adjustments may be made based on the metadata. As an example, the spherical dynamic mask for the field of view of the scene may be further adjusted based on lens-specific calibration information, or the like. Thus, the mask can be built and adjusted in real time during playback to adjust the field of view, to account for different sources of content, or the like. For example, the original media content may be captured in a lens projection space. During the process of transmission and rendering, the content may be encoded in other spaces. In some embodiments, the mask can be defined in any of these spaces, and can be used at a playback device to adjust a field of view.

Turning to FIG. **7B****,** an interplay is depicted between a user device **140** and a media distribution platform **120,** in which a user device **140** is configured to adjust a media item based on comfort data. The flow diagram begins at block **740,** where the user device **140** sends a request for a particular media item. The request may include an indication of user comfort data **702.** For example, a user at user device **140** may access a media distribution platform **120** and select and immersive media item for playback. By selecting the media item, the request may automatically include user comfort data **702.** Alternatively, a user of the user device **140** may include user comfort data **702** in the request. In some embodiments, the request **740** may be transmitted without the user comfort data **702.**

At block **742,** the media distribution platform **120** receives the request. At block **744,** the media distribution platform **120** can select content for the requested media item based on the user comfort data **702.** For example, the media distribution platform **120** may identify the 3D video **704** along with ancillary data for the 3D video **704,** such as alt scene **706** and comfort metadata **708.** In some embodiments, the media distribution platform **120** may obtain or have access to the user comfort data **702** and may select ancillary data for the 3D video **704** based on the user comfort data. For example, if 3D video **704** does not satisfy user comfort data **702,** the media distribution platform **120** may select alt scene **706** along with 3D video **704** to satisfy the user comfort data **702.** However, if the 3D video satisfies the user comfort data **702,** the media distribution platform **120** may not select the alt scene **706.** The flow diagram proceeds to block **746,** where the content for the media item selected at block **744** is provided to the playback device, such as user device **140.** As shown, the content may include 3D video **704,** alt scene **706,** and comfort metadata **708.** Further, the metadata track may contain additional information for use by the user device 140, such as lens-specific calibration data for each of the cameras that captured the media content, such as 3D video 704 and alt scene 706.

The flow diagram proceeds to block **748,** where the 3D video **704** and ancillary content, such as alt scene **706** and comfort metadata **708,** are obtained from the platform. In some embodiments, the content may be downloaded or streamed from media distribution platform **120.** For example, a content stream may include 3D video **704** and/or comfort metadata **708.** As another example, the content may be downloaded to the user device **140** prior to playback.

The flow diagram continues to block **750,** where comfort metrics are determined for the media item, or a portion of the media item. As described above, the comfort metrics may be determined for different segments of the media item, such as different scenes. According to some embodiments, the comfort metrics may be obtained from the comfort metadata **708.** In some embodiments, the comfort metrics determined at block **750** may be adjusted or calculated based on comfort metadata **708** and local parameters, such as playback device characteristics or the like. In some embodiments, user activity may contribute to comfort metrics, such as if a user moves their head quickly, or in a same direction as motion in a scene. To that end, comfort metrics may be determined in real time based on user action.

At block **752** the comfort metrics are compared to user comfort data **702** for user device **140.** According to one more embodiments, user comfort data **702** may be specific to a user of user device **140.** The comfort metrics may indicate a score or parameters which are determined to be satisfied prior to presentation of the corresponding immersive media item or portion of the immersive media item. For example, the comfort metrics may indicate a maximum acceleration, velocity, or the like, and may be based on camera motion for a camera capturing the immersive media content, and/or motion characteristics of components of the captured scene. Further, the comfort metrics may indicate a measurement for abrupt changes of velocity, acceleration, direction, or the like, which may be allowed by the user.

The flow diagram continues to block **754,** where the 3D video **704** is adjusted for the user device **140** using the received ancillary data. For example, an alternate version of the 3D video **704** may be generated to include the alternate scene **706.** For example, comfort metadata **708** may indicate a scene in 3D video **704** associated with comfort metrics which fails to satisfy the user comfort data **702.** Thus, the video frames corresponding to the particular scene may be replaced with video frames corresponding to alt scene **706.** In some embodiments, adjusting the media item may also include adjusting for one or more cameras from which the media was captured. For example, the portions of the media item from the 3D video 704 and the alt scene 706 may have been captured by different cameras. In some embodiments, the media item content may include an indication of the cameras capturing different portions of the content such that the user device 140 can identify lens-specific calibration data for each of the cameras, and render the media item frames accordingly, thereby addressing optical distortions caused during image capture. In some embodiments, adjusting the 3D video data may include adjustments during playback, such as changing a level of immersiveness, changing a field of view, warping media content to compensate for scene and/or user motion, and the like.

The flow diagram concludes at block **756,** where the media item is played at the user device **140.** Notably, the media item played at block **756** differs from 3D video **704.** However, a user device associated with motion comfort data **502** that is satisfied by 3D video **704** may have a different viewing experience, and thus may view 3D video **704** without adjustment.

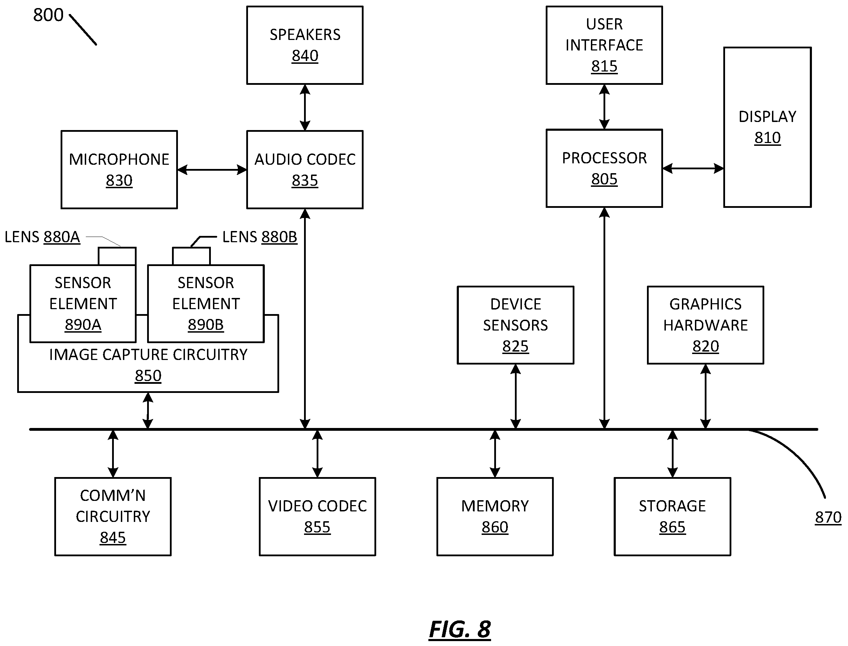

Referring now to FIG. **8****,** a simplified functional block diagram of illustrative multifunction device **800** is shown according to one embodiment. Multifunctional device **800** may show representative components, for example, for devices of media content system **100,** media content distribution platform **120,** and user device **140** of FIG. **1****.** Multifunction electronic device **800** may include processor **805,** display **810,** user interface **815,** graphics hardware **820,** device sensors **825** *(e.g.,* proximity sensor/ambient light sensor, accelerometer and/or gyroscope), microphone **830,** audio codec(s) **835,** speaker(s) **840,** communications circuitry **845,** digital image capture circuitry **850** *(e.g.,* including camera system) video codec(s) **855** (e.g., in support of digital image capture unit), memory **860,** storage device **865,** and communications bus **870.** Multifunction electronic device **800** may be, for example, a digital camera or a personal electronic device such as a personal digital assistant (PDA), personal music player, mobile telephone, or a tablet computer.

Processor **805** may execute instructions necessary to carry out or control the operation of many functions performed by device **800** *(e.g.,* such as the generation and/or processing of images or video as disclosed herein). Processor **805** may, for instance, drive display **810** and receive user input from user interface **815.** User interface **815** may allow a user to interact with device **800.** For example, user interface **815** can take a variety of forms, such as a button, keypad, dial, a click wheel, keyboard, display screen and/or a touch screen. Processor **805** may also, for example, be a system-on-chip such as those found in mobile devices and include a dedicated graphics processing unit (GPU). Processor **805** may be based on reduced instruction-set computer (RISC) or complex instruction-set computer (CISC) architectures or any other suitable architecture and may include one or more processing cores. Graphics hardware **820** may be special purpose computational hardware for processing graphics and/or assisting processor **805** to process graphics information. In one embodiment, graphics hardware **820** may include a programmable GPU.

Image capture circuitry **850** may include two (or more) lens assemblies **880A** and **880B,** where each lens assembly may have a separate focal length. For example, lens assembly **880A** may have a short focal length relative to the focal length of lens assembly **880B.** Each lens assembly may have a separate associated sensor element **890A** and **890B.** Alternatively, two or more lens assemblies may share a common sensor element. Image capture circuitry **850** may capture still and/or video images. Output from image capture circuitry **850** may be processed, at least in part, by video codec(s) **855** and/or processor **805** and/or graphics hardware **820,** and/or a dedicated image processing unit or pipeline incorporated within circuitry **850.** Images so captured may be stored in memory **860** and/or storage **865.**

Sensor and camera circuitry **850** may capture still and video images that may be processed in accordance with this disclosure, at least in part, by video codec(s) **855** and/or processor **805** and/or graphics hardware **820,** and/or a dedicated image processing unit incorporated within circuitry **850.** Images so captured may be stored in memory **860** and/or storage **865.** Memory **860** may include one or more different types of media used by processor **805** and graphics hardware **820** to perform device functions. For example, memory **860** may include memory cache, read-only memory (ROM), and/or random-access memory (RAM). Storage **865** may store media *(e.g.,* audio, image, and video files), computer program instructions or software, preference information, device profile information, and any other suitable data. Storage **865** may include one more non-transitory computer-readable storage mediums including but not limited to magnetic disks (fixed, floppy, and removable) and tape, optical media such as CD-ROMs and digital video disks (DVDs), and semiconductor memory devices such as Electrically Programmable Read-Only Memory (EPROM), Electrically Erasable Programmable Read-Only Memory (EEPROM), or the like. Memory **860** and storage **865** may be used to tangibly retain computer program instructions or code organized into one or more modules and written in any desired computer programming language. When executed by, for example, processor **805,** such computer program code may implement one or more of the methods described herein.

The scope of the disclosed subject matter should be determined with reference to the appended claims, along with the full scope of equivalents to which such claims are entitled. In the appended claims, the terms "including" and "in which" are used as the plain-English equivalents of the respective terms "comprising" and "wherein."
Exemplary embodiments are set out in the following items and items:

### Items

1. A non-transitory computer readable medium comprising computer readable code executable by one or more processors to:
   receive media data and motion data for the media data;
   determine whether a motion compensation trigger is satisfied; and
   in response to the motion compensation trigger being satisfied:
      perform a corrective action on then media data to obtain adjusted media data, and
      present the adjusted media data on a display of an electronic device.
2. The non-transitory computer readable medium of item 1, wherein the motion compensation trigger is based on a personal motion compensation threshold of a viewer.
3. The non-transitory computer readable medium of any of items 1-2, wherein the motion compensation trigger is based on one or more physical characteristics of the viewer.
4. The non-transitory computer readable medium of any of items 1-3, wherein the motion compensation trigger is based on a user-selected motion level.
5. The non-transitory computer readable medium of any of items 1-4, wherein the computer readable code to determine whether the motion compensation trigger is satisfied comprises computer readable code to:
   determine whether a change in acceleration satisfies a threshold.
6. The non-transitory computer readable medium of any of items 1-5, wherein the motion data comprises an indication of an acceleration and a direction.
7. The non-transitory computer readable medium of any of items 1-6, wherein the computer readable code to perform a corrective action comprises computer readable code to:
   determine a prescriptive motion based on the motion data; and
   apply the prescriptive motion to the media data.
8. The non-transitory computer readable medium of any of items 1-7, wherein the computer readable code to perform a corrective action comprises computer readable code to:
   adjust a level of immersiveness of the media data.
9. The non-transitory computer readable medium of any of items 1-8, wherein the computer readable code to perform a corrective action comprises computer readable code to:
   replace the media data with alternative media data for playback.
10. The non-transitory computer readable medium of any of items 1-9, wherein the motion data comprises an indication of a high motion event in corresponding media data.
11. A method comprising:
   receive media data and motion data for the media data;
   determine whether a motion compensation trigger is satisfied; and
   in response to the motion compensation trigger being satisfied:
      perform a corrective action on then media data to obtain adjusted media data, and
      present the adjusted media data on a display of an electronic device.
12. The method of item 11, wherein the motion compensation trigger is based on a personal motion compensation threshold of a viewer.
13. The method of any of items 11-12, wherein the motion compensation trigger is based on one or more physical characteristics of the viewer.
14. The method of any of items 11-13, wherein the motion compensation trigger is based on a user-selected motion level.
15. The method of any of items 11-14, wherein determining whether the motion compensation trigger is satisfied comprises:
   determining whether a change in acceleration satisfies a threshold.
16. The method of any of items 11-15, wherein the motion data comprises an indication of an acceleration and a direction.
17. The method of any of items 11-16, wherein performing a corrective action comprises:
   determining a prescriptive motion based on the motion data; and
   applying the prescriptive motion to the media data.
18. The method of any of items 11-17, wherein performing a corrective action comprises:
   adjusting a level of immersiveness of the media data.
19. The method of any of items 11-18, wherein performing a corrective action comprises:
   replacing the media data with alternative media data for playback.
20. The method of any of items 11-19, wherein the motion data comprises an indication of a high motion event in corresponding media data.
21. A system comprising:
   one or more processors; and
   one or more computer readable medium comprising computer readable code executable by the one or more processors to:
      receive media data and motion data for the media data;
      determine whether a motion compensation trigger is satisfied; and
      in response to the motion compensation trigger being satisfied:
         perform a corrective action on then media data to obtain adjusted media data, and
         present the adjusted media data on a display of an electronic device.
22. The system of item 21, wherein the motion compensation trigger is based on a personal motion compensation threshold of a viewer.
23. The system of any of items 21-22, wherein the motion compensation trigger is based on one or more physical characteristics of the viewer.
24. The system of any of items 21-23, wherein the motion compensation trigger is based on a user-selected motion level.
25. The system of any of items 21-24, wherein the computer readable code to determine whether the motion compensation trigger is satisfied comprises computer readable code to:
   determine whether a change in acceleration satisfies a threshold.
26. The system of any of items 21-25, wherein the motion data comprises an indication of an acceleration and a direction.
27. The system of any of items 21-26, wherein the computer readable code to perform a corrective action comprises computer readable code to:
   determine a prescriptive motion based on the motion data; and
   apply the prescriptive motion to the media data.
28. The system of any of items 21-27, wherein the computer readable code to perform a corrective action comprises computer readable code to:
   adjust a level of immersiveness of the media data.
29. The system of any of items 21-28, wherein the computer readable code to perform a corrective action comprises computer readable code to:
   replace the media data with alternative media data for playback.
30. The system of any of items 21-30, wherein the motion data comprises an indication of a high motion event in corresponding media data.
31. A method comprising:
   receiving media content for a 3D media item;
   receiving motion metadata for the 3D media item;
   receiving a request for the 3D media item from a playback device; and
   in response to receiving the request:
      identifying a portion of the media content for the 3D media item based on motion comfort data for the playback device; and
      providing the portion of the media content to the playback device.
32. The method of item 31, further comprising:
   determining, based on the motion metadata, whether the 3D media item satisfies a high motion threshold; and
   in response to the 3D media item satisfying the high motion threshold, presenting a listing for the 3D media item in a distribution platform interface with a high motion indicator for the 3D media item.
33. The method of any of items 31-32, wherein the portion of the media content is further identified based on a user comfort setting for the playback device.
34. The method of any of items 31-33, wherein the media content comprises at least a complete video media item and at least one alternative scene for the 3D media item.
35. The method of any of items 31-34, further comprising:
   generating a first version of the 3D media item having a first motion score using the complete video item;
   generating a second version of the 3D media item in which a first scene of the complete video item is replaced with a first alternative scene of the at least one alternative scenes, wherein the second version of the 3D media item has a second motion score; and
   providing the first version of the 3D media item and the second version of the 3D media item to the playback device.
36. The method of any of items 31-35, wherein the motion metadata is comprised in a timed metadata track associated with the 3D media item.
37. A non-transitory computer readable medium comprising computer readable code executable by one or more processors to:
   receive media content for a 3D media item;
   receive motion metadata for the 3D media item;
   receive a request for the 3D media item from a playback device; and
   in response to receiving the request:
      identify a portion of the media content for the 3D media item based on motion comfort data for the playback device; and
      provide the portion of the media content to the playback device.
38. The non-transitory computer readable medium of item 37, further comprising computer readable code to:
   determine, based on the motion metadata, whether the 3D media item satisfies a high motion threshold; and
   in response to the 3D media item satisfying the high motion threshold, present a listing for the 3D media item in a distribution platform interface with a high motion indicator for the 3D media item.
39. The non-transitory computer readable medium of any of items 37-38, wherein the portion of the media content is further identified based on a user comfort setting for the playback device.
40. The non-transitory computer readable medium of any of items 37-39, wherein the media content comprises at least a complete video media item and at least one alternative scene for the 3D media item.
41. The non-transitory computer readable medium of any of items 37-40, further comprising computer readable code to:
   generate a first version of the 3D media item having a first motion score using the complete video item;
   generate a second version of the 3D media item in which a first scene of the complete video item is replaced with a first alternative scene of the at least one alternative scenes, wherein the second version of the 3D media item has a second motion score; and
   provide the first version of the 3D media item and the second version of the 3D media item to the playback device.
42. The non-transitory computer readable medium of any of items 37-41, wherein the motion metadata is comprised in a timed metadata track associated with the 3D media item.
43. A system comprising:
   one or more processors; and
   one or more computer readable media comprising computer readable code executable by the one or more processors to:
      receive media content for a 3D media item;
      receive motion metadata for the 3D media item;
      receive a request for the 3D media item from a playback device; and
      in response to receiving the request:
         identify a portion of the media content for the 3D media item based on motion comfort data for the playback device; and
         provide the portion of the media content to the playback device.
44. The system of item 43, further comprising computer readable code to:
   determine, based on the motion metadata, whether the 3D media item satisfies a high motion threshold; and
   in response to the 3D media item satisfying the high motion threshold, present a listing for the 3D media item in a distribution platform interface with a high motion indicator for the 3D media item.
45. The system of any of items 43-44, wherein the portion of the media content is further identified based on a user comfort setting for the playback device.
46. The system of any of items 43-45, wherein the media content comprises at least a complete video media item and at least one alternative scene for the 3D media item.
47. The system of any of items 43-46, further comprising computer readable code to:
   generate a first version of the 3D media item having a first motion score using the complete video item;
   generate a second version of the 3D media item in which a first scene of the complete video item is replaced with a first alternative scene of the at least one alternative scenes, wherein the second version of the 3D media item has a second motion score; and
   provide the first version of the 3D media item and the second version of the 3D media item to the playback device.
48. The system of any of items 43-47, wherein the motion metadata is comprised in a timed metadata track associated with the 3D media item.

### Articles

1. A non-transitory computer readable medium comprising computer readable code executable by one or more processors to:
   receive media data and comfort metrics for the media data;
   determine, based on the comfort metrics, whether a compensation trigger is satisfied; and
   in response to the compensation trigger being satisfied:
      perform a corrective action on the media data to obtain adjusted media data, and
      present the adjusted media data on a display of an electronic device.
2. The non-transitory computer readable medium of article 1, wherein the compensation trigger is based on user-specific comfort data of a viewer.
3. The non-transitory computer readable medium of any of articles 1-2, wherein the compensation trigger is based on one or more physical characteristics of a viewer.
4. The non-transitory computer readable medium of any of articles 1-3, wherein the compensation trigger is based on a user-selected motion level.
5. The non-transitory computer readable medium of any of articles 1-4, wherein the computer readable code to determine whether the compensation trigger is satisfied comprises computer readable code to:
   determine whether a change in acceleration satisfies a threshold.
6. The non-transitory computer readable medium of any of articles 1-5, further comprising:
   select lens-specific calibration data for each of one or more portions of the media data in accordance with one or more capture devices of the one or more portions of the media data, and
   wherein the lens-specific calibration data is used to obtain the adjusted media data.
7. The non-transitory computer readable medium of any of articles 1-6, wherein the computer readable code to perform a corrective action comprises computer readable code to:
   determine a prescriptive motion based on the motion data; and
   apply the prescriptive motion to the media data.
8. A method comprising:
   receive media data and comfort metrics for the media data;
   determine, based on the comfort metrics, whether a compensation trigger is satisfied; and
   in response to the compensation trigger being satisfied:
      perform a corrective action on the media data to obtain adjusted media data, and
      present the adjusted media data on a display of an electronic device.
9. The method of article 8, wherein the compensation trigger is based on user-specific comfort data of a viewer.
10. The method of any of articles 8-9, wherein the compensation trigger is based on one or more physical characteristics of a viewer.
11. The method of any of articles 8-10, wherein the compensation trigger is based on a user-selected motion level.
12. The method of any of articles 8-11, wherein performing the corrective action comprises:
   adjusting a level of immersiveness of the media data.
13. The method of any of articles 8-12, wherein performing the corrective action comprises:
   replacing the media data with alternative media data for playback.
14. The method of any of articles 8-13, wherein performing the corrective action comprises:
   adjusting a field of view of the media data.
15. A system comprising:
   one or more processors; and
   one or more computer readable medium comprising computer readable code executable by the one or more processors to:
      receive media data and comfort metrics for the media data;
      determine, based on the comfort metrics, whether a compensation trigger is satisfied; and
      in response to the compensation trigger being satisfied:
         perform a corrective action on the media data to obtain adjusted media data, and
         present the adjusted media data on a display of an electronic device.
16. The system of article 15, wherein the comfort metrics are encoded in a metadata track for the media data.
17. The system of any of articles 15-16, wherein the corrective action is performed in accordance with rendering information in the metadata track.
18. The system of any of articles 15-17, wherein the computer readable code to perform a corrective action comprises computer readable code to:
   adjust a level of immersiveness of the media data.
19. The system of any of articles 15-18, wherein the computer readable code to perform a corrective action comprises computer readable code to:
   replace a portion of the media data with alternative media data for playback.
20. The system of any of articles 15-19, wherein the comfort metrics comprise an indication of a phobia event in the media data.

## Claims

1. A method comprising:
receive media data and comfort metrics for the media data;
determine, based on the comfort metrics, whether a compensation trigger is satisfied; and
in response to the compensation trigger being satisfied:
perform a corrective action on the media data to obtain adjusted media data, and
present the adjusted media data on a display of an electronic device.

2. The method of claim 1, wherein the compensation trigger is based on user-specific comfort data of a viewer.

3. The method of any of claims 1-2, wherein the compensation trigger is based on one or more physical characteristics of a viewer.

4. The method of any of claims 1-3, wherein the compensation trigger is based on a user-selected motion level.

5. The method of any of claims 1-4, wherein performing the corrective action comprises:
adjusting a level of immersiveness of the media data.

6. The method any of claims 1-5, wherein performing the corrective action comprises:
replacing the media data with alternative media data for playback.

7. The method of any of claims 1-6, wherein performing the corrective action comprises:
adjusting a field of view of the media data.

8. The method of any of claims 1-7, further comprising
determining a prescriptive motion based on the motion data; and
applying the prescriptive motion to the media data.

9. The method of any of claims 1-8, further comprising:
selecting lens-specific calibration data for each of one or more portions of the media data in accordance with one or more capture devices of the one or more portions of the media data, and
wherein the lens-specific calibration data is used to obtain the adjusted media data.

10. A non-transitory computer readable medium comprising computer readable code configured to perform the method of any of claims 1-9.

11. A system comprising:
one or more processors; and
one or more computer readable medium comprising computer readable code executable by the one or more processors to:
receive media data and comfort metrics for the media data;
determine, based on the comfort metrics, whether a compensation trigger is satisfied; and
in response to the compensation trigger being satisfied:
perform a corrective action on the media data to obtain adjusted media data, and
present the adjusted media data on a display of an electronic device.

12. The system of claim 11, wherein the comfort metrics are encoded in a metadata track for the media data.

13. The system of claim 12, wherein the corrective action is performed in accordance with rendering information in the metadata track.

14. The system of any of claims 11-13, wherein the computer readable code to perform a corrective action comprises computer readable code to:
replace a portion of the media data with alternative media data for playback.

15. The system of any of claims 11-14, wherein the comfort metrics comprise an indication of a phobia event in the media data.
